# EUROPEAN PATENT APPLICATION

(11) **EP 0 801 043 A2**
(43) Date of publication of application: **15.10.1997**
(21) Application number: 97105844.1
(22) Date of filing: 09.04.1997
(51) Int. Cl.: C05F 11/00, A01G 1/04

(54) **Production method of soil conditioner**

(30) Priority: 09.04.1996 JP 111945/96
(71) Applicant: Shigenobu, Watari, Nagano-City, Nagano (JP)
(72) Inventor: Shigenobu, Watari, Nagano-City, Nagano (JP)
(74) Representative: Sunderland, James Harry

(57) **Abstract**

A mushroom is cultivated with a mushroom culture containing crushed grain shell as a primary component. One or plurality of additives necessary for constituting a soil conditioner to a waste culture after cultivation of the mushroom, which includes an animal protein material is blended. By this, the animal protein material effectively acts in fermentation of ray fungus, defoliate and other bacteria The obtained soil conditioner may be mixed with the natural soul, good quality of soil with fertility..

## Description

### BACKGROUND OF THE INVENTION

### Field of the Invention

The present invention relates to a production method of a soil conditioner for promoting growth of plant by adding to a soil.

### Description of the Related Art

Conventionally, an artificial soil utilizing waste culture after cultivation of champignon or mushroom, has been disclosed in Japanese Unexamined Patent Publication (Kokai) No. Heisei 2-46229 (1990).

The artificial soil is composed of a waste culture after cultivation of champignon or mushroom by a mushroom culture containing crushed grain shell as a primary component, blended with one or more additive required for soil constitution, to obtain good quality of virus free artificial soil. The artificial soil can be used as soil.

On the other hand, such artificial soil may also be used as a soil additive (soil conditioner) providing good result for plant culture. When used as soil additive, growth of plant is promoted and a yield point is significantly increased. For example, in cultivation of Brassica chinensis komatsuna, in comparison with cultivation using natural soil, the live weight above ground of the cultivated Brassica chinensis komatsuna becomes about two or three times, the plant length becomes about 1.5 times, and number leaves becomes about 1.2 times.

### SUMMARY OF THE INVENTION

In consideration of such soil conditioning effect of an artificial soil, it is an object of the present invention to provide a production method of a soil conditioner which can further improvement of artificial soil for promoting growth of plant, can obtain good quality of soil which can maintain fertility to be strong against disease.

In order to accomplish the above-identified Application, a production method of a soil conditioner comprises the steps of:
cultivating a mushroom with a mushroom culture containing crushed grain shell as a primary component; and
blending one or plurality of additives necessary for constituting a soil conditioner to a waste culture after cultivation of the mushroom, which includes an animal protein material.

In this case, animal protein is a powder of dried In chrysalis of silkworm. For example, a blending amount of the powder or particle of dried chrysalis may be in a range of 1 to 50% by weight. In the alternative, animal products may is a fish meal or waste in fish processing. The blending amount of the fish meal or the waste of the fish processing may be in a range of 1 to 40% by weight.

By this, the animal protein material acts effectively for fermentation of ray fungus, defoliating. By blending the soil conditioner material to the natural soil, good soil which may maintain fertility. Namely, in general, when agricultural chemicals, chemical, chemical fertilizer are used, continuous cropping becomes difficult by lowering of fertility. By the soil conditioner, the soil which is resistive against root-knot disease (Brassicaceae), nematode (nematode disease), soil disease-causing bacteria (Fusarium, pichurim, lyzophtonia or so forth), can be obtained. Thus, not only for the plant growth promoting effect (fertilize effect) but also effect as conditioner can be achieved.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to be present invention, but are for explanation and understanding only.

In the drawings:
Fig. 1 is a graph showing a result of experiments for confirming effect of a soil conditioner produced by a production method according to the present invention;
Fig. 2 is a blend table of materials employing for confirming effect of the soil conditioner;
Fig. 3 is a table showing a result of experiments (live weight above ground) for confirming effect of the soil conditioner;
Fig. 4 is a table showing a result of experiments (plant length) for confirming effect of the soil conditioner;
Fig. 5 is a table showing a result of experiments (number of leaves) for confirming effect of the soil conditioner;
Fig. 6 is a graph showing a result of experiments for confirming effect of another soil conditioner produced by a production method according to the present invention;
Fig. 7 is a blend table of materials employing for confirming effect of the soil conditioner of Fig. 6;
Fig. 8 is a table showing a result of experiments (live weight above ground) for confirming effect of the soil conditioner of Fig. 6; and
Fig. 9 is a table showing a result of experiments (plant length) for confirming effect of the soil conditioner of Fig. 6.

### DETAILED DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscure the present invention.

At first, a culture for mushroom is produced. In food industries or so forth, large amount of corn cores after removal of corn grain of a sweet corn, are disposed. Such corn cores are crushed into fine grain to utilize as primary component of the mushroom culture. The reason why the mushroom culture is intermediately produced instead of directly using the corn cores, is to provide higher added value by utilizing in cultivation of mushroom per se. As other grain shell, walnut, chaff, further grain shells of peach, apricot and any other grain shells after removal of pulps may also be utilized.

Then, for the crushed corn core, wheat bran, rice bran, bean curd refuse (dry matter) are added and stirred. Thereafter, by adding water, moisture content is adjusted at about 65%. In this case, per one culture bin, 80 to 160 g of corn core, 20 to 90g of wheat bran, 10 to 60g of rice bran and 20 to 70g of bean curd refuse (dry matter) are blended.

Next, utilizing the mushroom culture thus produced, mushrooms (enoki mushroom, nameko mushroom, hiratake mushroom, maitake mushroom or the like) are cultivated in known mushroom cultivation method.

On the other hand, the mushroom culture after harvesting the mushroom (waste culture) is used for production of the soil conditioner according to the present invention. At first, using the waste culture, a basic soil conditioner is produced. The basic soil conditioner is produced by blending one or two additives required for constitution of the soil to the waste culture. In practice, for 60 to 80% by weight of waste culture, 3 to 18% by weight of waste of fermentation material, 1 to 3% by weight of mineral component (slug), 5 to 15% by weight of carbon and quire small amount of commensal parasite are blended. It should be noted that blending is performed in sterilized room to pay attention for virus free production environment, and performs production with implementing necessary sterilization process.

The foregoing table may be supplemented as follow:
Waste of fermentation material: waste of fermentation material generated in brewing industry or the like, grapes (wine), wheat (whisky, beer), hop (beer), rice (rice wine/sake), potato (vinegar) and the like are preferred.
Mineral component: slag containing large amount of mineral, blue blood precipitated in the bottom of the lake. Of course, it may be possible to individually add calcium, iron, phosphorous or so forth as mineral component.
Carbon: carbonized coffee, sawdust or so forth;
Commensal parasite: Bacillus Zubuchillus, Thermoactinomyces or the like and including versicular-arbuscular mycorrhiza bacteria, eguminous bacteria.

It should be noted that the additive required for constitution of soil is various additive required for physical property (air permeability or the like), chemical property (acidic property or the like), microorganic property (biodegradability or the like) and composite property of these properties. All of the foregoing additives are not always required and additives are selectively added as required. Other additive can also be added. Particularly, as other additive, activated carbon filtration membrane processed the waste generated during production process of rice wine, may be utilized as amino acid, and suitable for increasing of planting of bacteria.

Next, for such basic soil conditioner, animal protein (waste animal protein) is blended. As the animal protein material, a chrysalis powder produced by drying chrysalis of silkworm, crushing the chrysalis into a power having a grain of diameter of about 1 to 15 mm. In this case, it is desirable to differentiate the size of the grain of the powder depending upon application (kind) of the soil conditioner. Also, the surface of the powder grain is coated with shellac resin (biodegradable plastic) The shellac resin is a natural resin which has a water repelling property but is dissolved within two or three days when it contact with the water. By coating the grain of the chrysalis powder, alternation of property of the powder, such as going moldy or so forth, can be successfully avoided until use. Also, upon use, by douche, rain water or the like, the coating may be dissolved so that the animal protein material may be admixed with other components within the soil. The blending amount of the chrysalis is 1 to 50% by weight with respect to the basic soil conditioner, and more preferably about 20% by weight.

The soil conditioner thus produced may be packed as vacuum packing or packed together with a nitrogen gas. It should be noted that it is possible to use the power of the dried chrysalis of silkworm may be directly used as animal protein material. Also, dried chrysalis may be used as they are and, in the alternative after degreasing.

On the other hand, in order to confirm growth promotion effect of the soil condition thus obtained and for checking optimal blending amount of the animal protein material, the following experiment was performed.

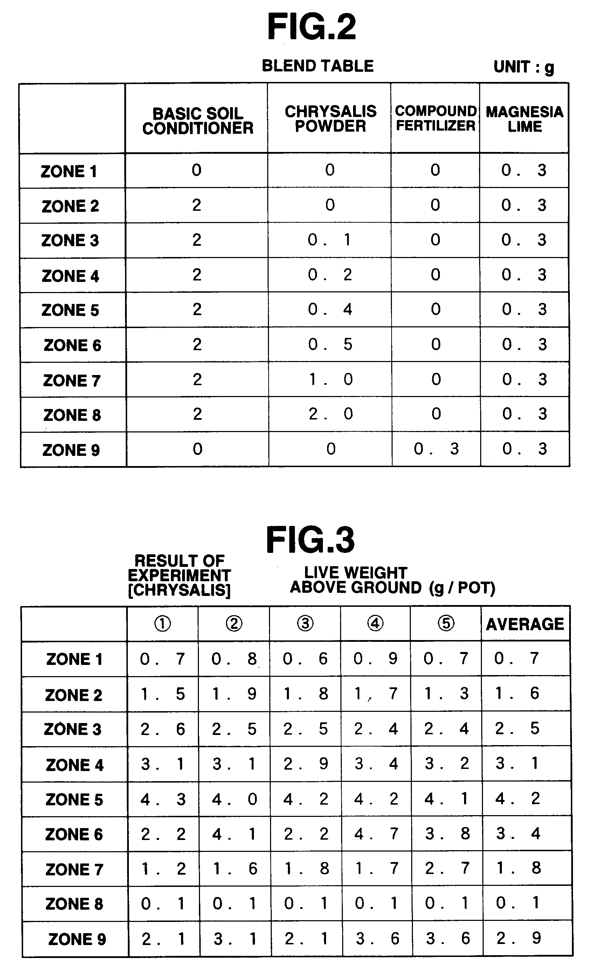

At first, nine sets of five series of connected pots (1 bot 4 x 5 cm) for raising of seeding were prepared. Respective sets are assumed as zone 1 to zone 9. Then, sandy soil is filled in each pot (field-moist soil 70g/pot). To the sandy soil in each pot, the basic soil conditioner shown in Fig. 2, the powder of chrysalis of silkworm, compound fertilizer, magnesia lime are added with mutually different blending ratio and mixed. Then, Brassica chinensis komatsuna was cultivated. Cultivation was performed in a gardening vinyl house (0 to 30 °C). Douche was performed appropriately for avoiding drying.

The results of experiments are shown in Figs. 3 to 5. As can be clear from these, one blending 20% by weight of chrysalis powder (zone 5) exhibits the best results. In comparison with that using only basic soil conditioner (zone 2), the live weight above ground was about 2.6 times, the plant length was about 1.8 times. Thus, significant growth promotion effect of the Brassica chinensis komatsuna could be confirmed. On the other hand, one blending 50% by weight of chrysalis powder to the basic soil conditioner (zone 7), the growth promotion effect was slightly improved in comparison with the case where only basic soil conditioner is used (zone 2). Also, one blending 100% by weight of chrysalis powder in the basic soil conditioner (zone 8), growth failure was caused.

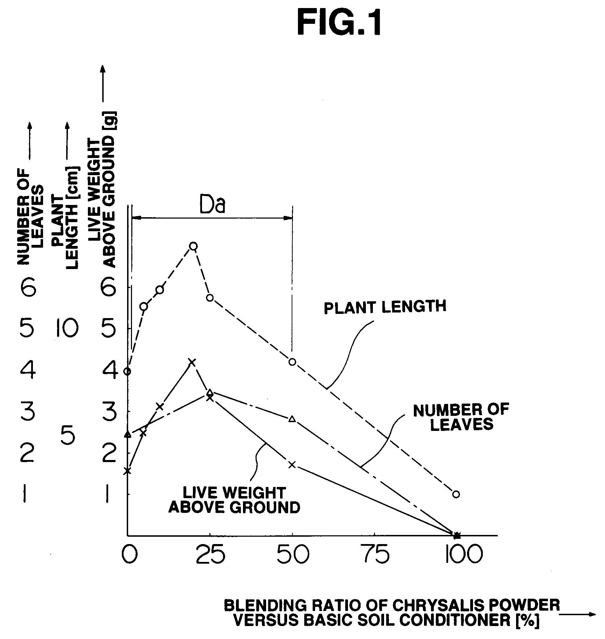

The result has been shown in Fig. 1 in a form of graph. Comparing the growth promoting effect, when blending amount of the chrysalis powder (animal protein material) versus the soil conditioner exceeds 50% by weight, growth promotion effect is just comparable or lower than the case where only basic soil conditioner is used. Therefore the blending amount of the animal protein material is optimal in a range of about 1 to 50% by weight as indicated by Da.

On the other hand, as the material of the animal protein, fish meal or fish powder of sardine, Pacific saury, dragonfish or so forth may also be used. Particularly, the fish meal of sardine is preferred. The fish meal may also be used directly as fish meal or processed into powder, similarly to those in the case of chrysalis of silkworm.

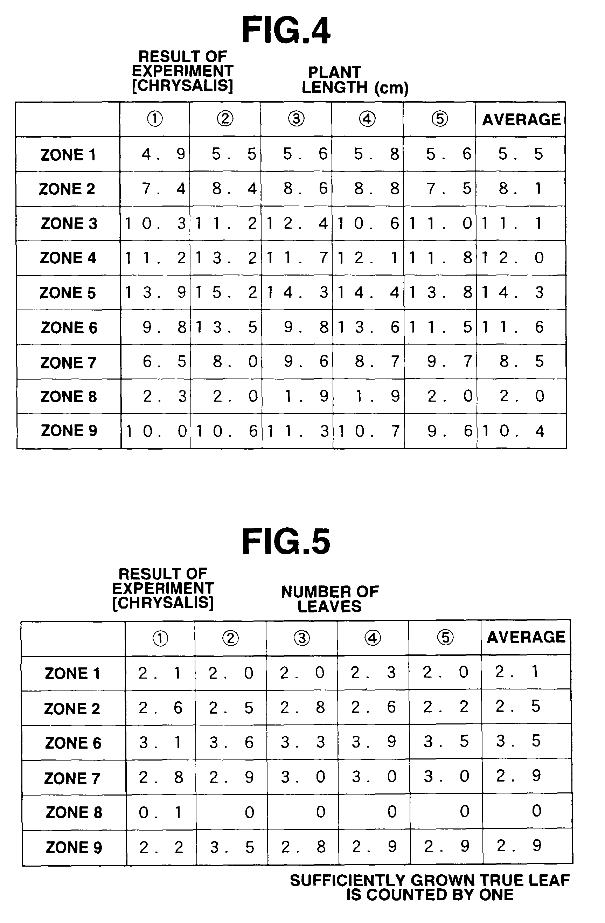

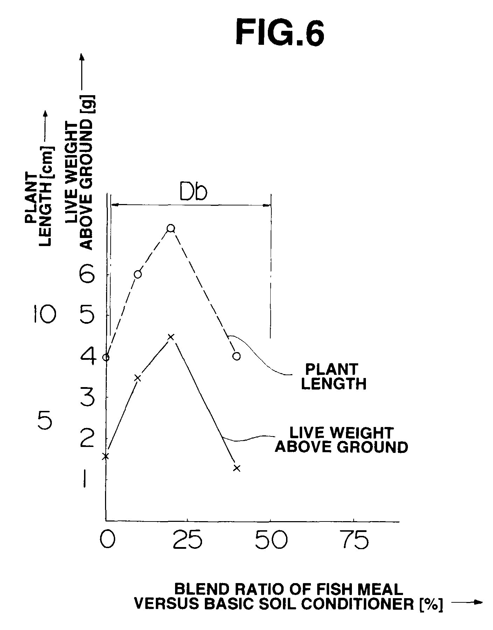

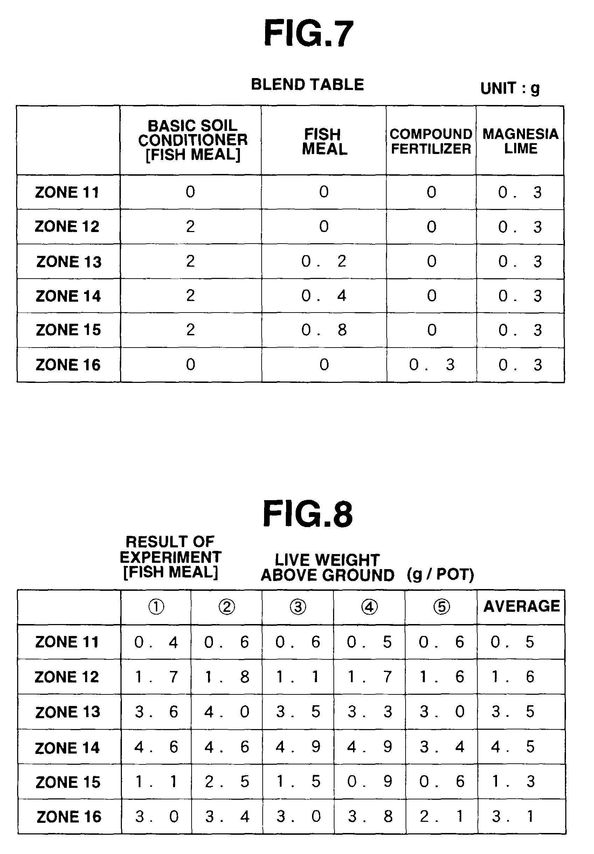

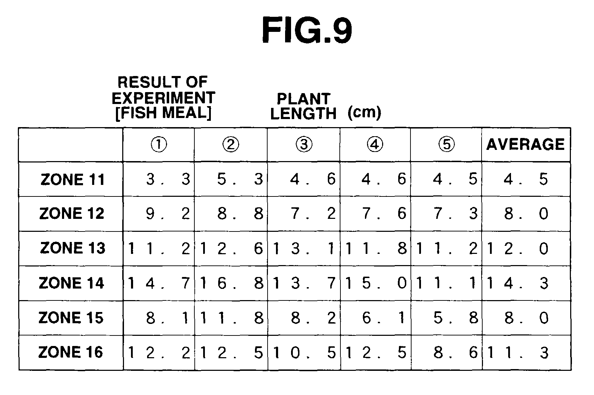

With respect to the fish meal, similar experiments were performed. Fig. 7 is a blend table similarly to Fig. 2, Figs. 8 and 9 shows results corresponding to those in Figs. 3 and 4. The results in Figs. 8 and 9 are shown in a form graph in Fig. 6. As can be clear from these, comparing the growth promotion effect, the preferred range of the blending amount of the fish meal to the basic soil conditioner is about 1 to 40% by weight, as indicated by Db, similarly to the case of the chrysalis of the silkworm. Particularly, the best result was obtained in the blending amount of about 20% by weight. It should be noted, as the fish meal, waste of fish processing, such as fish sausage, fermented fish products, liquor of tuna, crab, crab shell or so forth.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodied within a scope encompassed and equivalents thereof with respect to the feature set out in the appended claims.

For instance, "cultivating mushroom" should mean not only cultivating and harvesting the mushroom but also includes intermediate process from inoculation of bacteria to culturing of fungal thread.

## Claims

1. A production method of a soil conditioner comprising the steps of:
cultivating a mushroom with a mushroom culture containing crushed grain shell as a primary component; and
blending one or plurality of additives necessary for constituting a soil conditioner to a waste culture after cultivation of the mushroom, which includes an animal protein material.

2. A production method as set forth in claim 1, wherein said animal protein is a powder of dried chrysalis of silkworm.

3. A production method as set forth in claim 2, wherein a blending amount of the powder or particle of dried chrysalis is in a range of 1 to 50% by weight.

4. A production method as set forth in claim 1, wherein said animal products is a fish meal or waste in fish processing.

5. A production method as set forth in claim 4, wherein the blending amount of the fish meal or the waste of the fish processing is in a range of 1 to 40% by weight.
